# EUROPEAN PATENT SPECIFICATION

(11) **EP 0 799 152 B1**
(45) Date of publication and mention of the grant of the patent: **14.10.1998**
(21) Application number: 96900598.2
(22) Date of filing: 19.01.1996
(51) Int. Cl.: B65F 1/10, B65F 1/14

(54) **A PLANT AND A PROCESS FOR DIFFERENTIATED REFUSE COLLECTION**
ANLAGE UND VERFAHREN ZUM SAMMELN VON NACH ART GETRENNTEN ABFÄLLEN
INSTALLATION ET PROCEDE DE COLLECTE DIFFERENCIEE D'ORDURES

(30) Priority: 19.01.1995 EP 95830011
(43) Date of publication of application: 08.10.1997
(73) Proprietor: MONSOON SERVICOS E GESTAO LDA, Funchal, Madeira (PT)
(72) Inventor: BRUNI, Remo, I-19100 La Spezia (IT)
(74) Representative: Gislon, Gabriele
(86) International application number: EP9600215
(87) International publication number: WO9622238

(56) References cited:
- EP-A- 0 543 763
- EP-A- 0 607 542
- EP-A- 0 608 767
- WO-A-92/01612
- WO-A-92/01615
- DE-A- 4 122 405
- DE-A- 4 302 568
- FR-A- 2 690 094
- FR-A- 2 705 952
- US-A- 4 413 698
- US-A- 4 416 085
- US-A- 5 257 577

## Description

### Field of the invention

The present invention relates to a plant and a process for differentiated refuse collection.

### Background of the invention

The disposal of refuse (and of urban solid refuse in particular) has become such a pressing problem that it cannot be solved by undifferentiated collection and removal to dumps or incinerators. Differentiated collection of some types of refuse, paper, glass and plastic, is known and current practice uses large separate bins or bell-shaped "bottle banks" placed directly in the street for each type of refuse. These containers are emptied periodically on fixed dates.

FR-A-2705952 and EPA-0543763 disclose a device for collecting undifferentiated special hospital refuse. The device comprises a badge for permitting authorized personnel only to dispose of the refuse into a container that is provided with means to recognize the badge and to memorize the operations done by the personnel. The memorized data can be transmitted to a central unity.

Differentiated collection based on separation of refuse by individual household or condominion has also been proposed.

US-A-5,257,577 discloses a household apparatus for collection of sorted waste. The apparatus comprises a plurality of containers for different refuses and a means to select the suitable container and place it under a refuse chute. However, the recyclable refuse thus sorted has to be disposed of in the traditional way, i.e. by means of bins mentioned above.

Furthermore, WO 92/01615 discloses a system for collecting different categories of separated wastes in a multi-story building. The system comprises a collection unit having a turntable with a plurality of separate receptacles, each of which receives a particular category of waste through a common single chute. Microprocessor control means allow the user to select a particular receptacle to be positioned beneath the common chute, as well as to prevent conflicts on the access to the common chute by other users.

This type of collection has not solved the problem, especially where there is low public awareness of the refuse problem.

Apart from the aforementioned problem of the impact on the environment, the cost itself of collection and disposal must be contained, the actual cost of the service provided must be measured accurately and working conditions improved.

### Disclosure of the invention

The aim of the present invention is to resolve the aforementioned drawbacks by means of a plant for the differentiated collection of refuse characterized according to Claim 1.

The invention also relates to a process for differentiated collection of refuse, characterized according to Claim 17. According to an aspect of the invention, each collection unit has a means of determining the status of the containers and of the unit and means of transmitting this status to the central unit. This means could comprise sensors to detect the level to which the containers are filled, electronic circuits to measure the weight of refuse, and alarms or signalling devices of such status.

In more detail, the plant according to the present invention comprises a multiplicity of the aforementioned collection units, all connected to a central control unit which receives status reports and alarm data and controls the collection units remotely.

According to another preferred aspect of the present invention, refuse can only be deposited through a locking hatch which can identify the user who unlocks it, e.g. by means of a magnetic swipe card or a "chip-card".

According to a preferred aspect of the process for the refuse collection according to the present invention, each collection unit is in two-way communication with at least one central control unit, sending data to and receiving control commands from that unit. The communication may be over a switched network or dedicated data-transmission line, or by radio frequency.

The process and the plant according to the invention result in many advantages over the prior art. In fact, the costs for collecting refuses according to the invention are 40 to 60% less than the costs for collecting undifferentiated refuse and even less with respect to the costs for collecting sorted refuses (actually these costs are higher than those for collecting undifferentiated refuse). Also the costs of refuse disposal in a damping site are reduced because the refuse is already sorted when it is collected and the sorted refuse can be recycled.

Another advantage is that the amount of sorted refuse conferred by the user to a collecting unit is memorized and transferred to the central unit. This makes it possible to calculate the amount of refuse collecting taxes that each user has to pay according to the percentage of sorted refuse conferred to the collection unit. In other words, the more the user sorts its own refuse, the lower is the tax he has to pay.

Another advantage is the optimization of normal operation - refuse is cleared when it is effectively necessary - and maintenance on the collection unit. Moreover, data collected on the depositing of refuse can be analysed statistically to rationalize the distribution of the collection units with regard both to coverage of an area and the type of refuse involved for each unit.

A further advantage is that the sorted refuse is already compacted when it is cleared by trucks or similar clearing means; thus, said clearing means or trucks do not need to be provided with compacting means, with a resulting decrease of their production cost.

### Brief description of the drawings

The invention will now be described in greater detail with reference to the enclosed drawings which are of an illustrative and non limiting nature:
- Figure 1 is a plan view of the collection unit according to the invention;
- Figure 2 is a schematic layout of the containers in the collection unit according to Fig. 1;
- Figure 3 is a transverse section along the axis A-A of the collection unit shown in Fig. 1;
- Figure 4 is a view as in Fig. 3 but with the container raised;
- Figure 5 is an enlarged view in section of a detail of the cover of the collection unit;
- Figure 6 is a partial view in section of the tower where the refuse is deposited;
- Figure 7 is an enlarged view of the loading cell of the collection unit;
- Figure 8 is another side view in section of the collection unit;
- Figure 9 is a schematic arrangement of a possible form of the plant according to the invention;
- Figure 10 is a schematic arrangement of another possible form of the plant according to the invention;
- Figure 11 is a section view of a hydraulic cylinder for a compactor of a collection unit in a plant according to an embodiment operated by hydraulic means;
- Figures 11A and 11B are enlarged views of some details of Figure 11;
- Figure 12 is a schematic arrangement of the electrical circuit of a collection unit in a plant according to the invention;
- Figure 13 is a schematic arrangement of the hydraulic circuit of a collection unit in a plant according to the invention; and

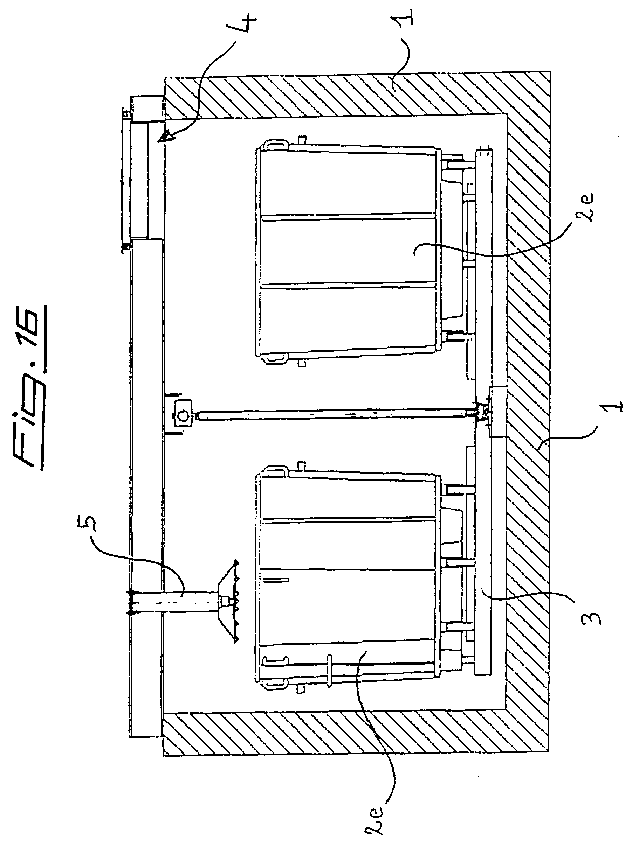

- Figures 14 to 17 are schematic views of the embodiment operated by hydraulic means.

### Modes of carrying out the invention

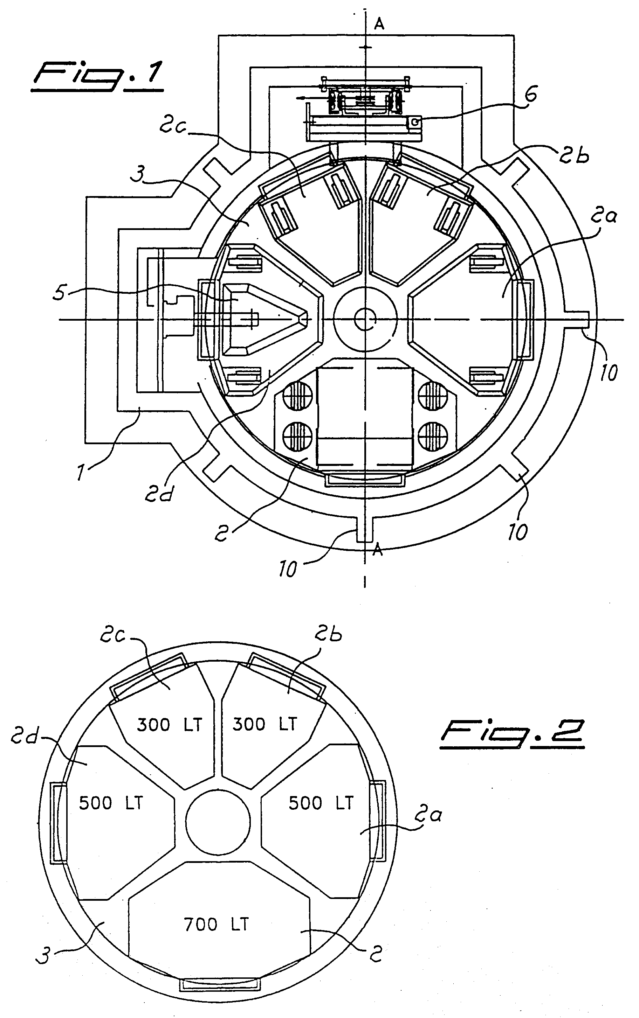

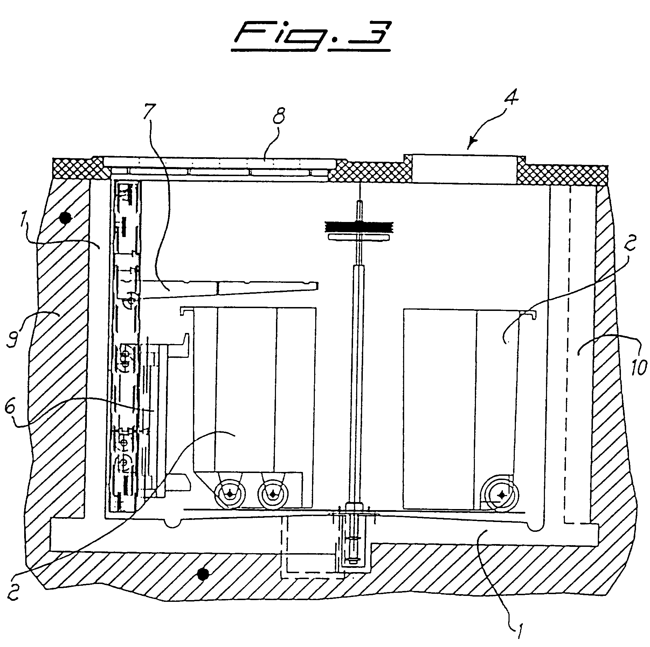

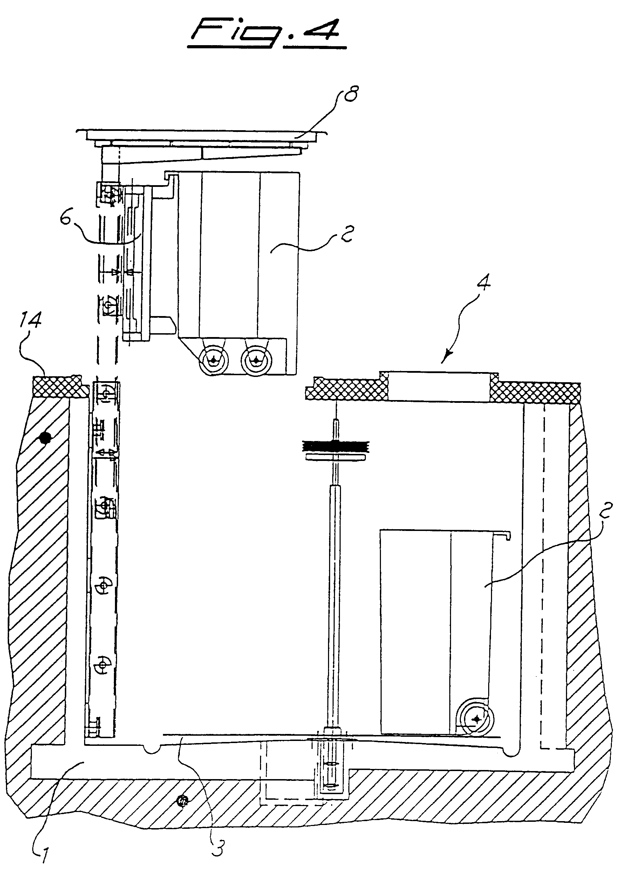

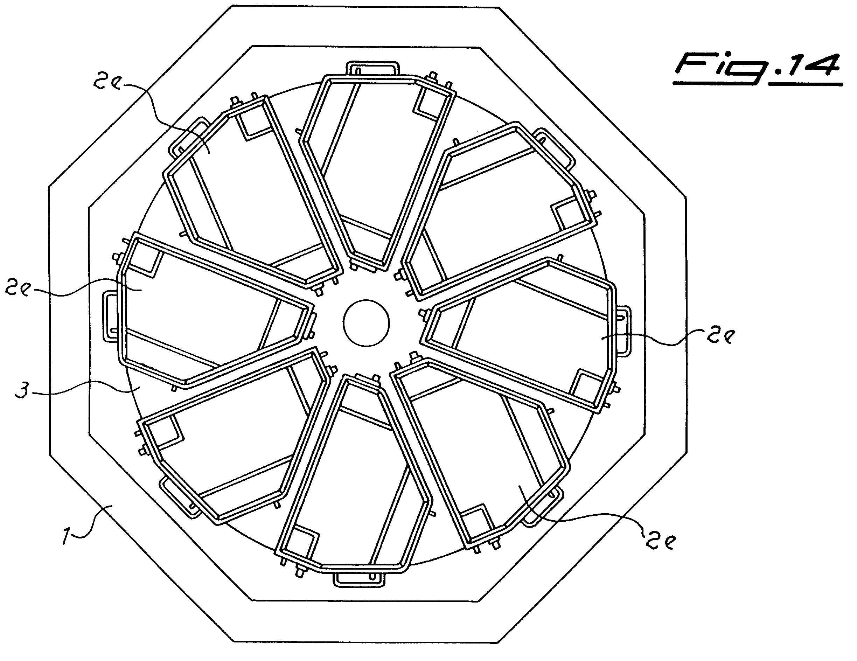

As stated above, the collection unit according to the invention comprises an outer vessel 1 within which there is a plurality of containers 2-2e. These containers are for the separate collection of two or more types of refuse and may be of different sizes (Figs. 1 and 2) according to the type of refuse collected in them but, preferably, all containers 2e have the same dimensions (as shown in Fig. 14). In this case, two or more containers may be used to receive the same type of refuse, e.g. paper or household refuse. Moreover, if the containers dedicated to one type of refuse, e.g. paper, fill up before the expected time, the collection unit can reconfigure itself by shifting one of the remaining, still empty, containers from their original destination (e.g. aluminium) to receive the sudden excess of the other refuse (paper). Otherwise, the reconfiguration command can start from the central control unit 100, following a transmission of a signal relating to the detected event in the collection unit.

In general, the collection unit according to the invention is foreseen to receive five different types of refuse: undifferentiated (in effect, the normal household refuse containing organic matter), paper, glass, plastic and aluminium.

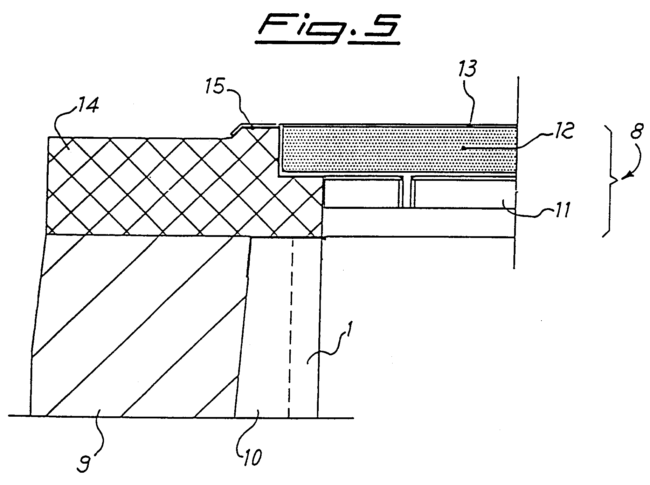

The containers are located on a turntable platform 3 which can rotate on command to reposition the containers in a plurality of positions. In particular, the turntable can rotate the container from the refuse receiving position under the loading chute 4, (Figs. 3, 4 and 15) to a compacting position where the refuse is compacted by a compactor 5 and then to a third position where the elevator 6 is located, which hooks the container and lifts it up to street level. Here the container can be rotated to be moved by traditional methods and the refuse loaded onto a garbage truck. Naturally, in collection unit on the surface or only partly underground, i. e. where the outside cover projects above street level, the elevator will be provided with a translational horizontal movement which will bring the container to a door from which it can be extracted.

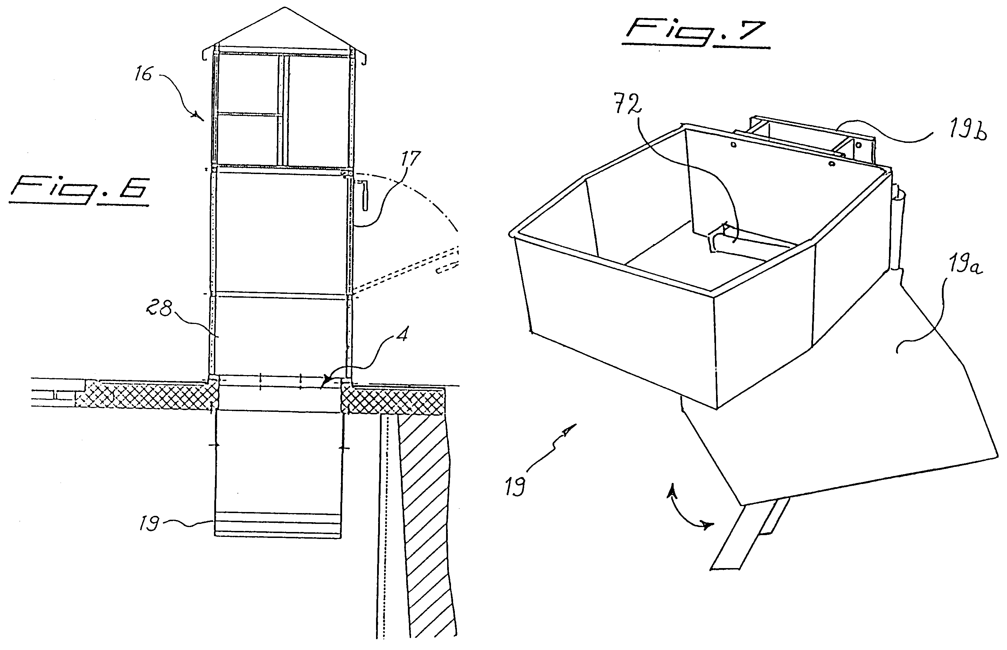

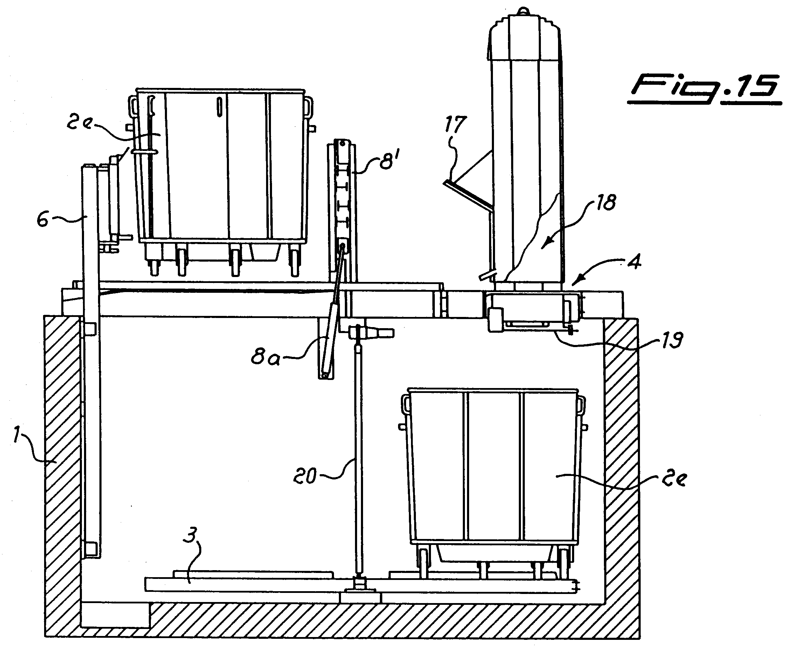

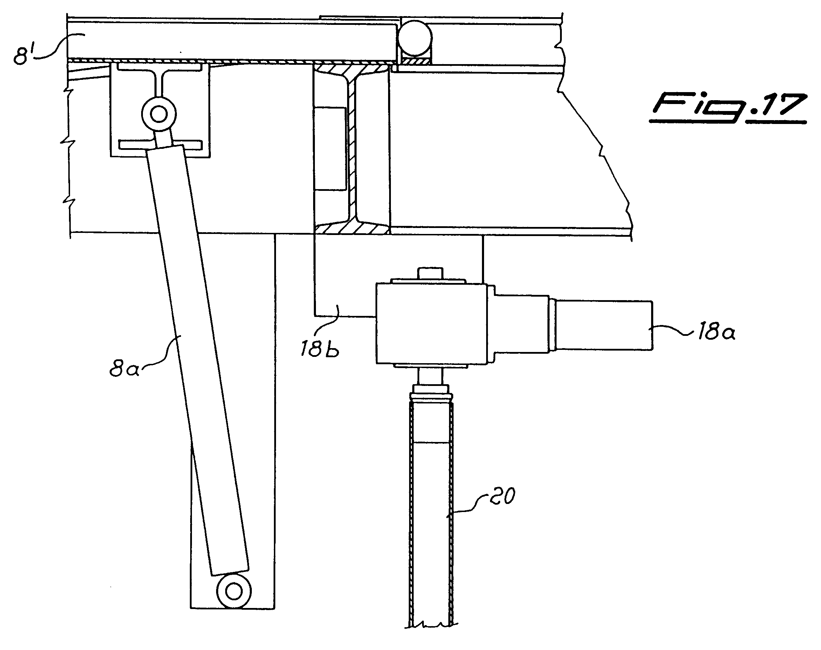

The elevator in the embodiment shown in Figs. 1-4 is electromechanical, driven by a motor and fitted with a frame 7 which, moving vertically, engages and lifts a portion 8 of the cover at street level (Fig. 4). In Fig. 15, the elevator is of the hydraulic type, and a portion 8' of the cover is operated by a hydraulic cylinder 8a that folds the said cover portion 8' to let the container 2e to be lifted at ground level. A detail of piston 8a and of its mounting on cover portion 8' is shown in fig. 17.

Fig. 5 shows details of the street-level cover 8. In this case (see Figs. 1-4) the vessel 1 is GRP (glass reinforced plastic) and lines the concrete walls 9. The vessel 1 itself could be made entirely from concrete with a thin layer of insulation lining it or incorporated into it. The walls of the vessel 1 have a series of ribs 10 whose shape acts as bracing to resist flexing stresses and to lighten the structure. The cover 8 has a galvanized steel base 11, a light alloy filler 12 and a surface layer 13 which can be made with different lining materials, e.g. rubber paving. The base 11 extends sideways to rest on a ledge 14 of the reinforced concrete manhole and the gap between the two is sealed by the seal 15 on a raised lip of the ledge 14 which prevents the entry of rainwater. For the same reason, the ledge 14 of the manhole and the surrounding pavement can be inclined.

Fig. 6 shows a view of the means of depositing the refuse in the collection unit according to the invention. Such means comprises a small tower 16 comprising a hatch 17, a chute 28, and a load-cell including a weighing unit 19. There is also provision in the upper part of the tower 16 for the location of a means of controlling access through the hatch 17 such as, for instance, the magnetic swipe card or "chip-card" reader described below. In the hydraulic embodiment, tower 16 also houses means to connect the unit to the power line and a transformer. The transformer output is connected to a battery charger and a battery pack that are housed under the cover of the collection unit, as will be better explained hereinafter.

Fig. 7 shows a schematic perspective view of a preferred embodiment of the weighing unit 19, comprising a horizontal weighing plate 19a, rotatable on a vertical axis, and a supporting element 19b, having a parallelogram shape, to fix unit 19 to the collection unit cover.

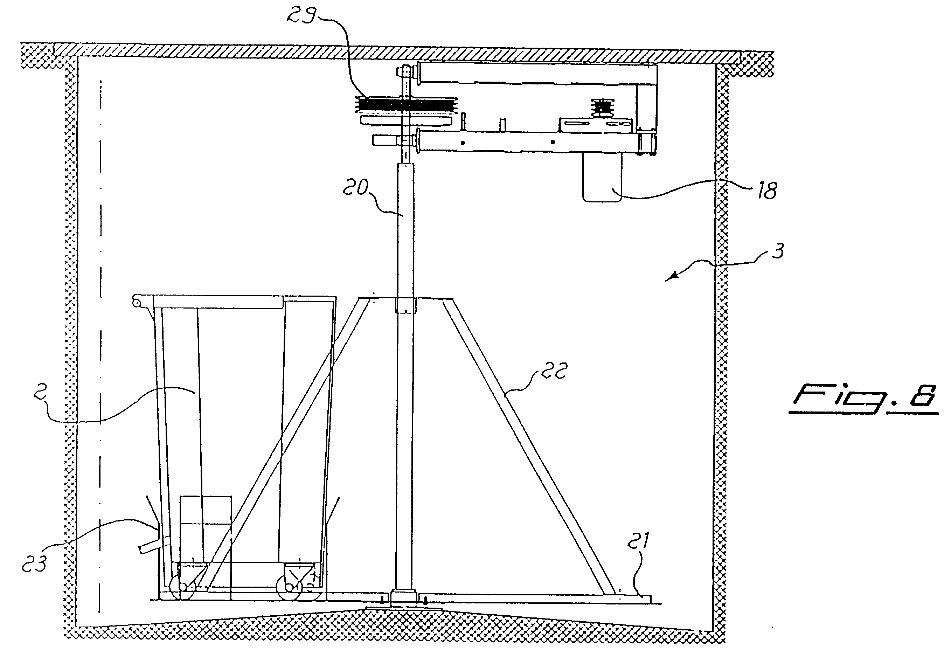

Fig. 8 shows a more detailed view of the turntable 3, in the electromechanical embodiement, comprising a motor 18 driving in a known way a pulley 29 which drives the shaft 20. The struts 22 connect the shaft to the platform 21 on which are located the housing and retainers 23 for the containers 2. The bearing for the shaft 20 in the base of the vessel is detailed in Fig. 3 and 4.

Fig. 17 shows the driving motor 18a in the hydraulically operated embodiment of the invention. Motor 18a, known per se in the art, is mounted on the top end of shaft 20. The motor 18a is fixed to the cover through elastic means 18b to absorb vibrations, possible shocks and shaft movements occurring during the use of the collection unit.

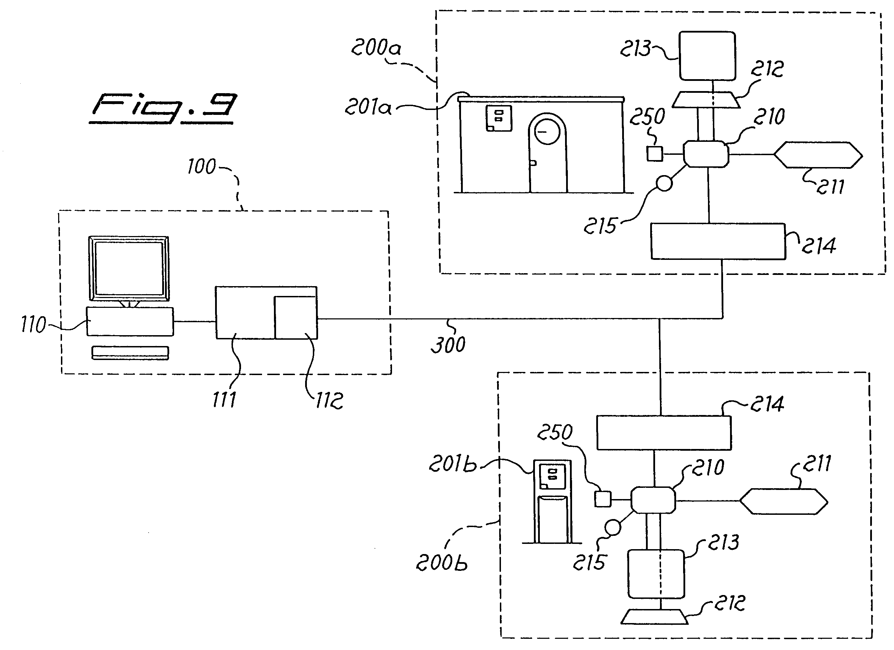

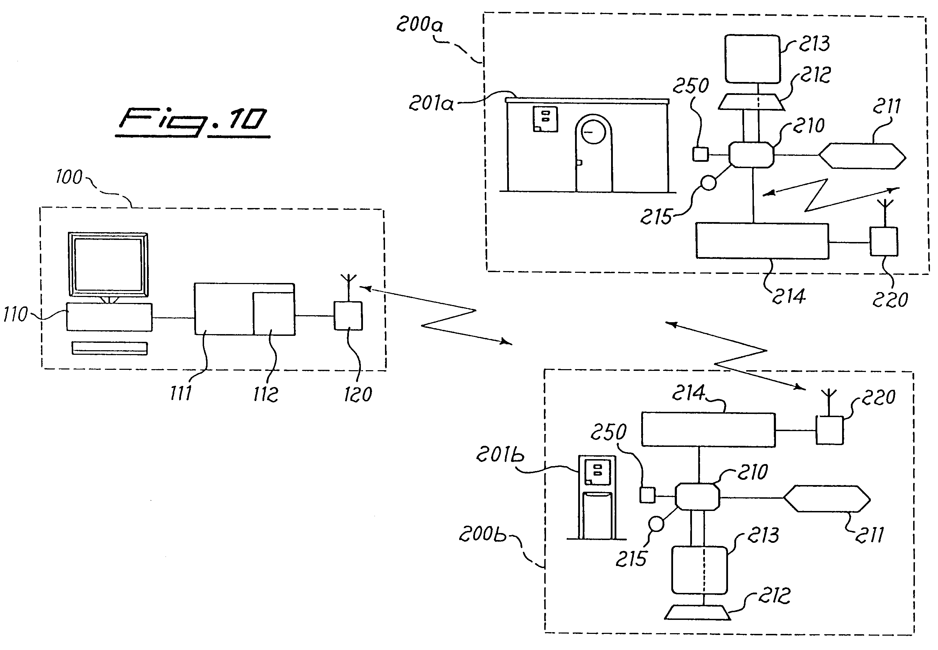

Figs. 9 and 10 show two schematic layouts of a plant for the differentiated collection of refuse according to alternative embodiments of the invention.

In general, the plant comprises a plurality of collection units (of which only two are shown - 200a and 200b) and at least one central control unit 100. The element 201a in Figs. 9 and 10 indicates that the unit 200a is a surface or semi-underground structure, while the element 201b indicating a tower 16 as in Fig. 6 shows that unit 200b is underground. Both types of structure may be present in the same plant.

According to a preferred embodiment of the invention, the control centre 100 and each of the units 200a and 200b are equipped with a means of transmitting and receiving signals carrying data on the status of each unit and its constituent containers, as well as commands from the control centre 100 to each unit 200a and 200b. Each component of the plant, whether control unit 100 or collection unit 200a or 200b is preferably equipped with the means to record the data or commands transmitted and received.

Data of a collection unit 200a or 200b are stored in memory means and periodically transmitted to the central control unit 100. Otherwise, data of a collection unit can also be transmitted following an explicit request of the central control unit 100.

When a drawback occours in a collection unit 200a or 200b, the same try to remedy by itself, for example trying a reconfiguration of the unit excluding some functions. Otherwise, each collection unit 200a, 200b is provided with means to send a recorded telephone message to the personnel charged of the maintenace, as well as an alert signal to the control central unit 100. The telephone call can also be repeated until an answer is reached.

The central control unit 100 comprises a means of processing the data sent from the collection units and consequently to manage the collection of the refuse.

In particular, the central control unit 100 comprises at least one primary computer 110 to oversee the remote control, i.e. the system of received data collection. The computer 110 is connected to a modem 111 to which is linked a hub 112 to relay the communication to each of the collection units 200a and 200b. The computer could be a personal computer with a 80486 processor and 60 MHz clock, at least 8 Mbytes of RAM and a 540 Mbyte hard disk.

Preferably, there is a second computer (not shown) connected to the computer 110 by local network or similar, to process the data and optimize the operation of the system of refuse collection over the territory. Such a second computer could be a personal computer with a 80486 processor and 60 MHz clock, 16 - 32 Mbytes of RAM and at least 1 Gbyte hard disk.

In each collection unit 200a or 200b, the means of accessing the chute 28 through the hatch 17 comprises a main control unit 210 for the collection unit and a user-interface comprising a card-reader 211 for verification of the user identity document, a keypad 212 for insertion of data and function selection, as well as a message display panel 213.

The identification document issued to each user may be a magnetic swipe card or a "chip-card" depending on the type of card-reader 211 installed in each unit. The keypad 212 comprises 6 to 12 keys which suffice to select the type of refuse and to call up any additional accessory functions which may be added, such as calls for oversize refuse removal. The display panel 213 consists of a simple two by twenty character display i.e. a common LCD dot-matrix display.

The main control unit 210 is also linked to the modem 214 in order to transmit and receive data and commands from the collection units 200a and 200b and the control unit 100. There is also provision for a signal-light 215 located on the outside of the collection unit where it is clearly visible. The signal-light 215 comprises, for example, two lights of different colours to indicate the availability or non availability to the user of space for refuse in the containers.

There is also provision for a secondary control unit 250, linked to the main control unit 210, to manage the container movement machinery, e.g. the motors which drive the elevator 6, the turntable 3 and the compactor 5 both in the electromechanical and hydraulic embodiment. The secondary control unit 250 manages the normal operation of the collection unit e.g. the compacting cycles for the refuse in the containers, but it is subordinate to the main controller 210 in carrying out operations appropriate to certain situations e.g. request for access during refuse deposit or clearing phase, or in response to commands from the central control 100.

According to a preferred aspect of the invention, the collection unit is equipped with a means of verifying the status of the containers and the collection unit. In particular one or more sensors are provided to monitor the level of refuse in the containers. The said sensors (not shown) are located on the collection unit at least in line with the compactor 5 and comprise at least one sensor to detect a certain level of refuse in the container during the compacting operation e.g. an electromechanical sensor which is actuated at 50 -75% of the container depth subject to compacting. Provision is made for a sensor to detect when the level of refuse exceeds a certain limit e.g. a photo-electric cell to detect when a light beam aligned with the upper rim of the container in the compacting position is interrupted.

Data related to the refuse depositing operations are recorded in memories linked to the main control unit 210, together with data on the status of the collection unit and containers, to be afterwards sent to the central control unit 100.

In the embodiment shown in Fig. 9, the modems 214 of both collection units 200a and 200b are connected by line 300 to a switched network or to a dedicated data transmission line. Obviously, the modem 111 and the hub 112 of the central control unit 100 are connected to the same network by line 300.

The data sent from the collection units 200a and 200b to the central control unit 100 and the commands from the latter to each of the former pass along the same transmission line 300.

Fig. 10 shows another embodiment of the plant which provides for the data and commands to be exchanged over a radio frequency link. In this case, the central control unit 100 is equipped with a transceiver 120 linked to the modem 111 through the hub 112. Similarly, the collection units 200a and 200b are each equipped with a transceiver 220 linked to the modems 214.

To deposit refuse, the user must insert the appropriate card, e.g. a magnetic swipe-card containing the user's identification code, into the slot on the reader 211 user panel on the front wall of the tower 16 or on any other easily accessible part of the collection unit. The main controller 210 checks the user's identification code to see if it is a user-code or an operative-code (refuse clearance operative). A match-check is made of the codes recorded in the control unit 210 memory for users not authorized to deposit refuse; such users would be people who had, for example, reported their cards missing.

When the user is given access to the collection unit, the main control unit 210 sends a message to the display 213 inviting the user to use the keypad 212 to select the type of refuse to be deposited.

At this point, depending on the choice made by the user, control passes to the secondary control unit 250 which rotates the turntable 3 to bring the desired container into the correct refuse-deposit position i.e. under the weighing unit 19. Once this position has been reached, the hatch 17 is opened to accept the refuse. The refuse passes through the chute 28 into the weighing unit 19, where it is weighed.

All data relating to each single deposit of refuse - the user's identity code, the type of refuse selected and the weight of refuse deposited - are recorded in the memory of the main control unit 210 to be later transmitted to the central control unit 100.

At the end of a single refuse depositing operation the user closes the hatch, which then locks and awaits the next deposit operation. The user, guided by the messages appearing on the visual display 213, can continue - by selecting another type of refuse to deposit - or terminate the operation; in the latter case the user-card previously inserted into the reader is returned.

Where the code identifies an operative the set of operations activated is completely different from that offered to the user.

In particular, the operative-code accesses the interior of the collection unit 200a and 200b and control of the container movement machinery (in particular the turntable 3 and the elevator 6) during the phases of differentiated collection.

Other operations, e.g. the compacting of the refuse in the containers and the transmission of data to the central control unit 100, may be scheduled periodically or follow a specific command from the central control unit 100 to each of the collection units 200a and 200b.

Furthermore, also each garbage truck can be provided with a remote control device mounted therein to operate the collection units during the clearing phase of any one type of the refuses. This is particularly useful to allow the clearing operation to be made by a single person.

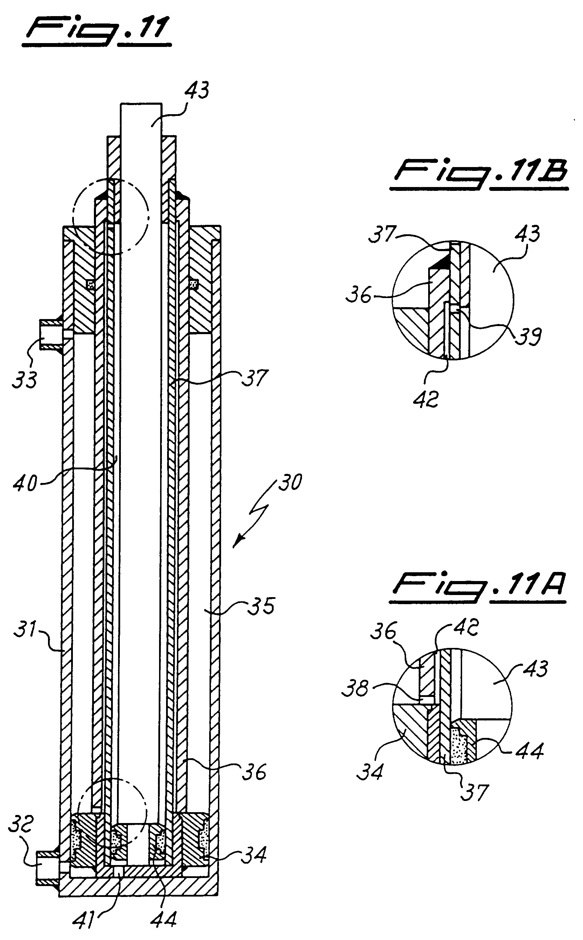

With particular reference to the hydraulic embodiment, in which at least the raising means 6 and the compacting means 5 are hydraulically operated, the compacting means 5 comprise a double-acting, double-rod cylinder 30 shown in Figure 11 in its retracted condition.

The cylinder 30 comprises a main jacket 31 having a first pipe connector 32 and a second pipe connector 33 for the hydraulic fluid. Inside the main jacket 31, a main piston 34 is slideably movable within a first piston chamber 35 along with a first piston rod 36 and a secondary jacket 37. The first piston chamber 35 is connected to a second piston chamber 40 by means of a through hole 41 provided in the bottom of the first piston rod 36.

As also shown in the detailed views of Figures 11A and 11B, there are provided two further passages 38 and 39 connecting the first piston chamber 35 to the second piston chamber 40 through a hollow space 42 defined between the first piston rod 36 and the secondary jacket 37. A secondary piston rod 43 is integral with a second piston 44 which is slideably movable in the second piston chamber 40.

When the compactor 5 is operated, the pressure in correspondance of the second pipe connector 33 is lowered or cut off, and the hydraulic fluid under pressure is applied to the first pipe connector 32 causing the forward movement of first piston 34 from its retracted position shown in Figure 11. As soon as the first piston 34 is moved, the hydraulic fluid flows in the second piston chamber 40, through the hole 41, causing the forward movement of the second piston 44. The pressure of the hydraulic fluid is thus maintained until the extended condition is reached, i.e. until the first piston rod 36 and the second piston rod 43 are completely extracted from the respective jackets 31 and 37.

In order to return the cylinder 30 in the retracted position, the pressure in correspondance of the first pipe connector 32 is lowered or cut off, and the hydraulic fluid under pressure is applied to the second pipe connector 33. The fluid causes the backward movement of the first piston 34 and flows also in the second piston chamber 40, through the passage 38, the hollow space 42 and the passage 39, causing the backward movement of the second piston 44 until both the piston rods 36 and 43 reach the position shown in Figure 11.

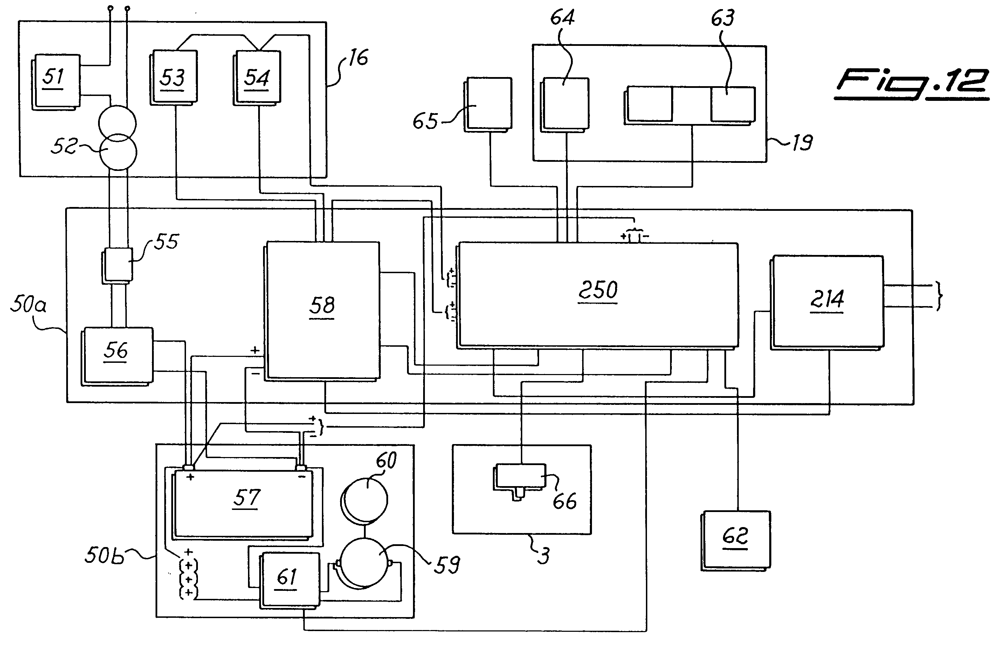

Figure 12 shows the electrical circuit of the collection unit according to the invention. The tower 16 houses an electric meter 51 and a stepdown transformer 52 connected to the network voltage of 220 Volts, as well as the interface modules 53 and 54 for the connection of the display 213, the card reader 211 and the keypad 212.

The output of the stepdown transformer 52 is connected to a low voltage section 50a, through a filter device 55, to a battery charger 56 providing a DC current of 8 A with a voltage of 56 V. The output of the battery charger 56 is connected to a set of rechargeable batteries 57 of 48 V, 18 Ah (in the low voltage section 50b) connected to a power supply device 58 (in the low voltage section 50a) providing the required voltages of 12 V and 24 V. Low voltage section 50a comprises a secondary control unit 250, as for example a PLC, and a modem 214 also described with reference to Figures 9 and 10.

High voltage section is contained only into the tower 16, i.e. over the level of ground. Only low voltage sections of the electric circuit are thus hosed inside the collection unit, thus allowing both collection and maintenance interventions without risk for the personnel.

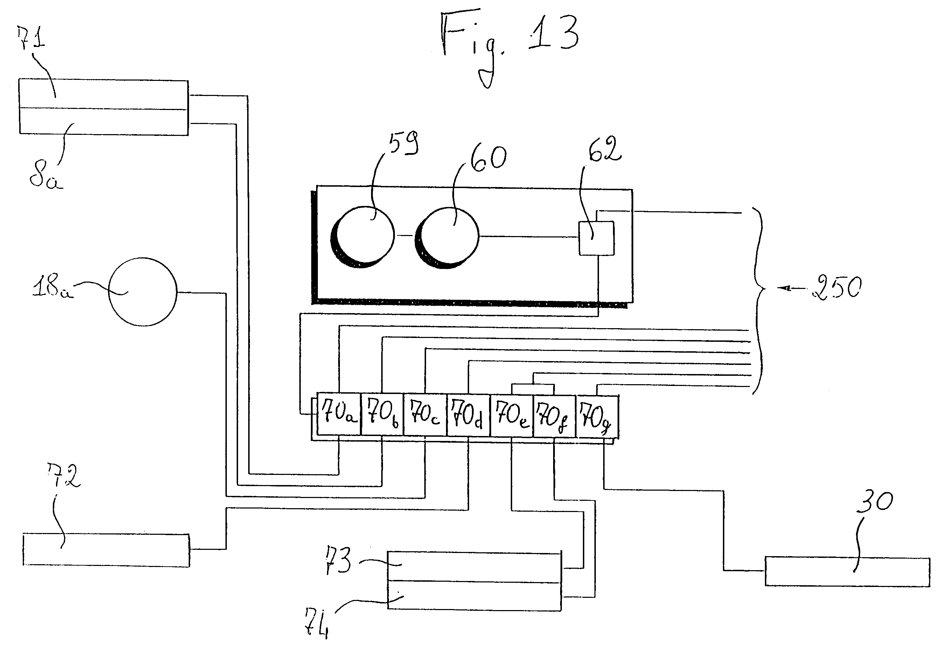

Low voltage section 50b also includes an electric motor 59 for driving a pump 60 which puts under pressure the fluid in the hydraulic circuit (shown in Figure 13), as well as a control device 61, acting on the electric motor 59, to regulate the flow rate of the fluid in the hydraulic circuit. The pressure of the fluid in the hydraulic circuit is aslo regulated by means of a servovalve 62, i.e. a solenoid valve of the proportional type, controlled by the secondary control unit 250. This arrangement allows to deliver only the power required for the function operated in the collection unit at a certain time.

The secondary control unit 250 also receives input signals from the weighing unit 19, in particular from a load sensor 63 for detecting the weigth of the refuse introduced into the collection unit and an ultrasonic sensor 64 for detecting the level of the refuses in the container 2 under the loading chute 4. Another ultrasonic sensor 65 is placed in correspondance of the compactor 5 to detect the level of the refuses in the container 2 before and/or after the compacting step. The secondary control unit 250 also receives an input signal from an encoder 66 to detect the position of the platform 3.

Figure 13 shows the schematic arrangement of the hydraulic circuit in which the movable elements of the collection unit are hydraulically operated. In the hydraulic circuit, downstream to the pump 60, there is provided the servovalve 62 in order to regulate the pressure in the whole circuit under the control of the secondary control unit 250. The output of the servovalve 62 is connected to each input of a set of solenoid valves 70a-70g, for example a set of solenoid valves for directional control of the type 4-3, also controlled by the secondary control unit 250.

Solenoid valve 70a is connected to a cylinder 71, which can also be a single-acting cylinder, operating the elevator 6, and solenoid valve 70b is connected to a double-acting cylinder 8a to open and close a cover portion 8' (see Figure 15) in correspondance of the elevator 6. Solenoid valve 70c is connected to the hydraulic motor 18a which moves the turntable 3, solenoid valve 70d is connected to a cylinder 72 which moves the weighing plate 19a of the weighing unit 19 and solenoid valves 70e and 70f are respectively connected to double-acting cylinders 73 and 74 to lift the cover 8. Finally, the solenoid valve 70g is connected to the double-acting, double-rod cylinder already disclosed with reference to Figure 11.

## Claims

1. A plant for the differentiated collection of refuse, comprising a plurality of collection units (200a, 200b) and a central control unit (100); each collection unit comprising: a plurality of containers (2) within an outer vessel (1), means (3, 4, 16, 17, 28) to feed different refuse to different containers; and means to detect the unit status, characterized by comprising means (19) to detect the data relevant to the amount of refuse within each container and means (214, 220) to transmit at least said data to said central control unit (100) and to receive data carrying signals from said central control unit (100), and a control means (210) to control operation of said collection unit; the said central control unit (100) comprising a means (111, 112, 120) of transmitting and receiving signals carrying said data to and from said collection units, and a means (110) of memorizing and processing said data to manage the operation or clearing the refuse from each of the said collection units according to the data received from each collection unit.

2. A plant according to Claim 1, wherein said means to feed different refuse to different containers comprise means (3) for moving the said containers (2) between a first refuse receiving position and two or more further positions and a means of selection to command the movement of the said containers to said receiving position.

3. A plant according to Claim 1 or 2, wherein said collection units (200a, 200b) have a means of controlling access to the interior of the said vessel to deposit refuse in the said containers, comprising a chute (28), a load cell with a weighing unit (19) to weigh the refuse deposited, a hatch (17) controlling access to the chute (28) and means (211, 212) of enabling the said hatch to be opened or closed.

4. A plant according to Claim 3, wherein the said enabling means of the hatch (17) comprise a user-interface linked to the said control means (210), the said user-interface comprising a device (211) for reading an identification document, at least one keypad (212) for data input and function selection, and at least one device (213) for displaying messages.

5. A plant according to any Claim 1 to 4, wherein said means to detect the data relevant to the amount of refuse within each container and collection unit status comprise said weighing unit (19) and sensing means (64, 65) to detect the level of refuse in said containers (2).

6. A plant according to any previous Claim, wherein said collection units comprise a means (210) of memorizing the data relating to refuse-depositing operations carried out, as well as data relating to the status of the said collection unit and said containers.

7. A plant according to any one previous Claim, wherein the said means of transmitting and receiving data carrying signals to and from said central unit comprises at least one modem (214) linked to said main control means (210), said modem being linked to a switchable network line or a dedicated data transmission network line (300).

8. A plant according to Claim 7, characterized by having a radio frequency transceiver (220) linked to said modem (214) for the said signals exchange.

9. A plant according to any previous Claim, wherein said collection units are underground and comprise a means (6) of raising the said containers to ground level.

10. A plant according to any Claim 1 to 8, wherein said collection units are on the surface, or partly underground, and comprise a means of extracting the said containers (2) from the interior of the said vessel (1).

11. A plant according to any previous claim, wherein said collection units comprise a means (5) of compacting the refuse within a container (2), said compacting means being provided at a compacting position that is different from the said receiving position.

12. A plant according to Claims 9 and 11, wherein at least said raising means (6) and said compacting means (5) are hydraulically operated.

13. A plant according to Claim 11, wherein said compacting means (5) comprise a double-acting, double-rod cylinder (30).

14. A plant according to any previous Claim, wherein said collection units comprise an electric circuit having at least a low voltage section (50a, 50b) connected to the network voltage by means of a stepdown transformer (52), said low voltage section comprising at least a battery charger (56), a set of rechargeable batteries (57), as well as an electric motor (59) to drive a pump (60) for setting a pressure in the hydraulic circuit to which at least said raising means (6) and said compacting means (5) are connected.

15. A plant according to Claim 14, characterized by having control means (61, 62) to regulate the flow rate and the pressure of the fluid in said hydraulic circuit.

16. A plant according to any previous Claim, further comprising a plurality of collecting vehicles, characterized by comprising a remote control device mounted on each vehicle to operate said collection units during the collection of any one type of the refuses.

17. A process for the differentiated collection of refuse from a plurality of collection units distributed over an area, comprising the deposit of sorted refuse in a collection unit (220a, 200b) by feeding said different refuse to different containers (2-2e), characterized by the steps of:
weighing said sorted refuse before feeding the different refuse to different containers and memorizing the relevant data;
transmitting data relevant to the amount of refuse within each container and the collection unit status to a central control unit (100);
memorizing said data in said central control unit (100) and processing said data to manage and control the operation of clearing each type of refuse from each of the said collect on units (200a, 200b) by means of dedicated clearing means; and
controlling the operation of said collection units (200a, 200b) by means of said central control unit (100) according to the data received from said collection units (200a, 200b).

18. Process according to Claim 17, wherein the said signals are transmitted over the lines of a switchable network or a dedicated data transmission network line.

19. Process according to Claim 17, wherein the said signals are transmitted over a radio-frequency link.

20. Process according to Claim 17, wherein in the said central control unit, said data from the said collection units are processed to enable or disable refuse collection at the said collection units and to manage operations to clears the refuse and carry out maintenance at each collection unit.

21. Process according to Claim 17, characterized by comprising the self reconfiguration of each of said collection units (200a, 200b) by means of the allocating of a container, already assigned to the collection of a certain type of refuse, to the collection of another type of refuse.

## Patentansprüche

1. Anlage zum Sammeln von nach Art getrennten Abfällen umfassend eine Vielzahl von Sammeleinheiten (200a, 200b) und eine zentrale Kontrolleinheit (100); wobei jede Kontrolleinheit umfaßt: eine Vielzahl von Behältern (2) innerhalb einer äußeren Kammer (1), Mittel (3, 4, 16, 17, 28), um verschiedene Abfälle in verschiedene Behälter zu überführen; und Mittel, um den Status der Einheit zu ermitteln, dadurch gekennzeichnet, daß Mittel (19) umfaßt werden, um Daten zur Abfallmenge in jedem Behälter zu ermitteln; und Mittel (214, 220), um zumindest die Daten zur zentralen Kontrolleinheit (100) zu übermitteln und Daten zu empfangen, die Signale von der zentralen Kontrolleinheit (100) übertragen, und Kontrollmittel (210), um die Operationen der Sammeleinheit zu kontrollieren; die zentrale Kontrolleinheit (100) umfaßt Mittel (111, 112, 120) zur Übertragung und zum Empfangen von Signalen, die die Daten von und zu den Sammeleinheiten übermitteln, und Mittel (110), die die Daten speichern und verarbeiten, um die Operationen der Leerung des Abfalles von jeder der Sammeleinheiten anhand der Daten, die von jeder Sammeleinheit erhalten wurden, auszuführen.

2. Anlage nach Anspruch 1, wobei die Mittel zur Überführung der verschiedenen Abfälle in verschiedene Behälter Mittel (3) umfassen, die die Behälter (2) zwischen einer ersten Stellung zum Empfang des Abfalls und zwei oder mehreren Stellungen bewegen, und Mittel nach Wahl, um die Bewegung der Behälter zu der Empfangsstelle anzuordnen.

3. Anlage nach den Ansprüchen 1 oder 2, wobei die Sammeleinheiten (200a, 200b) Mittel besitzen, die den Zugang zum Inneren der Kammer kontrollieren und Abfälle in den Behältern deponieren, umfassend einen Schacht (28), einen Ladebehälter mit einer Wägeeinheit (19), um den zu deponierenden Abfall zu wiegen, eine Klappe (17), die den Zugang zu dem Schacht (28) kontrolliert und Mittel (211, 212), die es erlauben die Klappe zu öffnen oder zu schließen.

4. Anlage nach Anspruch 3, wobei die Betätigungsmittel der Klappe (17) eine Benutzeroberfläche umfassen, die mit den Kontrollmitteln (210) verbunden ist, wobei die Benutzeroberfläche umfaßt: eine Vorrichtung (211) zum Lesen eines Identifikationsdokumentes, mindestens eine Tastatur (212) für Dateneingabe und Funktionsauswahl, und mindestens eine Vorrichtung (213), zur Anzeige von Nachrichten.

5. Anlage nach einem der Ansprüche 1 bis 4, wobei die Mittel zur Detektion der Daten zur Abfallmenge innerhalb jedes Behälters und zur Detektion der Daten zum Status der Sammeleinheit, die Wägeeinheit (19) und Sensormittel (64, 65) zur Füllstandsmessung des Abfalles in den Behältern (2) umfassen.

6. Eine Anlage nach einem der vorigen Ansprüche, wobei die Sammeleinheit Mittel (210) umfaßt, die die Daten speichern, die sich auf die ausgeführten Operationen der Anfallagerung beziehen, sowohl als auch Daten, die sich auf den Status der Sammeleinheit und der Behälter beziehen.

7. Anlage nach einem der vorigen Ansprüche, wobei die Mittel zur Übertragung und zum Empfangen von Daten, die die Signale von und zur Zentraleinheit übertragen; mindestens ein Modern (214) umfassen, das mit Hauptkonrollmitteln (210) verbunden ist, und das Modem mit einer umschaltbaren Netzwerkleitung oder einer darauf ausgerichteten Datenübertragungsnetzwerkleitung (300) verbunden ist.

8. Anlage nach Anspruch 7, dadurch gekennzeichnet, daß ein Radiofrequenzüberträger (220) mit dem Modem (214) zum Signalaustausch verbunden ist.

9. Anlage nach einem der vorigen Ansprüche, wobei die Sammeleinheiten unterirdisch liegen und Mittel (6) umfassen, um die Behälter auf Bodenniveau zu heben.

10. Anlage nach einem der Ansprüche 1 bis 8, wobei sich die Sammeleinheiten auf der Erdoberfläche oder teilweise unterirdisch befinden und Mittel umfassen, die es erlauben die Behälter (2) aus dem Inneren der Kammer (1) auszufahren.

11. Anlage nach einem der vorigen Ansprüche, wobei die Sammeleinheiten Mittel zur Verdichtung der Anfälle innerhalb eines Behälters (2) umfassen, wobei die Verdichtungsmittel an einer Verdichtungsposition bereitgestellt werden, die verschieden von der Einfüllposition ist.

12. Anlage nach den Ansprüchen 9 und 11, wobei zumindest die Hebemittel (6) und die Verdichtungsmittel (5) hydraulisch bedient werden.

13. Anlage nach Anspruch 11, wobei die Verdichtungsmittel (5) einen doppelbeweglich ineinander gesteckten Doppelzylinder (30) umfassen.

14. Anlage nach einem der vorigen Ansprüche, wobei die Sammeleinheit einen elektrischen Schaltkreis umfaßt, der zumindest einen Niedervoltbereich (50a, 50b) besitzt, der über einen Stepdown-Transformator (52) mit der Netzspannung verbunden ist, wobei der Niederspannungsbereich zumindest ein Batterieladegerät (56), einen Satz wiederaufladbarer Batterien (57), sowohl als auch einen Elektromotor (59) umfaßt, um eine Pumpe (60) zu betreiben, die einen Druck in dem hydraulischen Kreislauf aufbaut, mit dem zumindest die Hebemittel (6) und die Verdichtungsmittel (5) verbunden sind.

15. Anlage nach Anspruch 14, dadurch gekennzeichnet, daß sie Kontrollmittel (61, 62) enthält, um die Flußrate und den Druck der Flüssigkeit in dem hydraulischen Kreislauf zu regulieren.

16. Anlage nach einem der vorigen Ansprüche, die zusätzlich eine Vielzahl von Transportmitteln zum Sammeln umfaßt, dadurch gekennzeichnet, daß diese eine Fernsteuerung umfassen, die auf jedes der Transportmittel befestigt ist, um die Sammeleinheiten während des Sammelns jeglicher Art von Abfällen zu bedienen.

17. Verfahren zum Sammeln von Abfällen nach Art mit einer Vielzahl von Sammeleinheiten, die über ein Gebiet verteilt sind, umfassend die Lagerung von sortierten Abfällen in einer Sammeleinheit (200a, 200b), indem die verschiedenen Abfälle zu verschiedenen Behältern (2-2e) geführt werden, gekennzeichnet durch die Schritte:
• Wiegen der sortierten Abfälle vor dem Einfüllen der unterschiedlichen Abfälle in unterschiedliche Behälter und Speicherung der relevanten Daten;
• Übertragung der Daten, die für die Menge der Abfälle innerhalb eines jeden Behälters relevant sind und der Daten über den Status der Sammeleinheiten zu einer zentralen Kontrolleinheit (100);
• Speicherung der Daten in der Zentraleinheit (100) und Verarbeitung der Daten zum Bedienen und zur Kontrolle der Durchführung der Leerung von jeder Art von Abfällen von jedem der Sammeleinheiten (200a, 200b) mit Hilfe von dafür vorgesehenen Entleerungsmitteln; und
• Kontrolle der Bedienung der Sammeleinheiten (200a, 200b) durch Mittel der zentralen Kontrolleinheit (100) gemäß den Daten, die von den Sammeleinheiten (200a, 200b) empfangen wurden.

18. Verfahren nach Anspruch 17, wobei die Signale über die Leitungen eines umschaltbaren Netzwerkes oder einer dafür vorgesehenen Datenübertragungsnetzwerkleitung übertragen werden.

19. Verfahren nach Anspruch 17, wobei die Signale über eine Radiofrequenzverbindung übermittelt werden.

20. Verfahren nach Anspruch 17, wobei in der zentralen Kontrolleinheit die Daten der Sammeleinheiten verarbeitet werden, um die Abfallsammlung an der Sammeleinheit zu ermöglichen oder zu stoppen und um Operationen zur Entleerung der Abfälle und Wartungen an jeder Sammeleinheit durchzuführen.

21. Verfahren nach Anspruch 17, gekennzeichnet dadurch, daß dieses die eigenständige Neukonfiguration von jeder der Sammeleinheiten (200a, 200b) umfaßt, indem Mittel die Zuweisung eines Behälters, der bereits für das Sammeln einer bestimmten Abfallsorte bestimmt ist, für das Sammeln einer anderen Abfallsorte ermöglichen.

## Revendications

1. Installation pour réaliser la collecte différenciée de déchets, comprenant une pluralité d'unités de collecte (200a, 200b) et une unité centrale de commande (100) ; chaque unité de collecte comprenant : une pluralité de récipients (2) située à l'intérieur d'une enceinte extérieure (1), des moyens (3, 4, 16, 17, 28) pour envoyer différents déchets à différents récipients ; et des moyens pour détecter l'état des unités, caractérisée en ce qu'elle comprend des moyens pour déterminer les données concernant la quantité de déchets à l'intérieur de chaque récipient et des moyens (214, 220) pour transmettre au mains lesdites données à ladite unité centrale de commande (100) et à recevoir des signaux portant des données en provenant de l'unité centrale de commande (100), et des moyens do commande (210) pour commander le fonctionnement de ladite unité de collecte ; ladite unité centrale de commande (100) comprenant des moyens (111, 112, 120) pour émettre et recevoir des signaux véhiculant lesdites données en direction ou en provenance desdites unités de collecte, et des moyens (110) pour mémoriser et traiter lesdites données de manière à gérer le fonctionnement d'évacuation des déchets à partir de chacune desdites unités de collecte en fonction des données reçues en provenance de chaque unité de collecte.

2. Installation selon la revendication 1, dans laquelle lesdits moyens pour envoyer des déchets différents à des récipients différents comprennent des moyens (3) pour déplacer lesdits récipients (2) entra une première position de réception de déchets et deux autres positions ou plus et des moyens de sélection pour commander le déplacement desdits récipients jusqu'à ladite position de réception.

3. Installation selon la revendication 1 ou 2, dans laquelle lesdites unités de collecte (200a, 200b) comportent des moyens pour commander l'accès à l'intérieur dudit récipient pour le dépôt de déchets dans lesdits récipients, comprenant une goulotte (28), une cellule de charge comportant une unité de pesée (19) pour peser les déchets déposés, un sas (17) commandant l'accès a la goulotte (28) et des moyens (211, 212) permettant l'ouverture ou la fermeture dudit sas.

4. Installation selon la revendication 3, dans laquelle lesdits moyens de validation du sas (17) comprennent une interface de liaison avec un utilisateur reliée auxdits moyens de commande (210), ladite interface de liaison à l'utilisateur comportant un dispositif (211) pour lire un document d'identification, au moins un clavier (212) pour l'entrée de données et la sélection de fonctions et au moins un dispositif (213) pour afficher des messages.

5. Installation selon l'une quelconque des revendications 1 à 4, dans laquelle lesdits moyens pour détecter les données concernant la quantité de déchets à l'intérieur de chaque récipient et l'état des unités de collecte comprennent ladite unité de pondération (19) et lesdits moyens de détection (64, 65) servant à détecter le niveau des déchets dans lesdits récipients (2).

6. Installation selon l'une quelconque des revendications précédentes, dans laquelle desdites unités de collecte comprennent des moyens (210) pour mémoriser les données associées à des opérations de dépôt de déchets exécutées, ainsi que des données associées à l'état de ladite unité de collecte et desdits récipients.

7. Installation selon l'une quelconque des revendications précédentes, dans laquelle lesdits moyens d'émission et de réception de données véhiculant des signaux en direction ou en provenance de ladite unité centrale comprennent au moins un modem (214) relié auxdits moyens de commande principaux (210), ledit modem étant relié à une ligne commutable du réseau ou à une ligne dédiée (300) du réseau de transmission de données.

8. Installation selon la revendication 7, caractérisée en ce qu'elle possède un émetteur-récepteur à hautes fréquences (220) relié audit modem (214) pour ledit échange de signaux.

9. Installation selon l'une quelconque des revendications précédentes, dans laquelle lesdites unités de collecte sont souterraines et comprennent des moyens (6) pour soulever lesdits récipients jusqu'au niveau du sol.

10. Installation selon l'une quelconque des revendications 1 à 8, dans laquelle lesdits unités de collecte sont situées à la surface ou sont partiellement enterrées et comprennent des moyens pour extraire lesdits récipients (2) de l'intérieur de ladite enceinte (1).

11. Installation selon l'une quelconque des revendications précédentes, dans laquelle lesdites unités de collecte comprennent des moyens (5) pour tasser les déchets à l'intérieur d'un récipient (2), lesdits moyens de tassement étant prévue dans une position de tassement qui est différente de ladite position de réception.

12. Installation selon les revendications 9 et 11, dans laquelle au moins lesdits moyens de soulèvement (6) et lesdits moyens de tassement (5) sont actionnés hydrauliquement.

13. Installation selon la revendication 11, dans laquelle lesdits moyens de tassement (5) comprennent un vérin à double effet à deux tiges (30).

14. Installation selon l'une quelconque des revendications précédentes, dans laquelle lesdites unités de collecte comprennent un circuit électrique possédant au moins une section à basse tension (50a, 50b) connectée à la tension du réseau au moyen d'un transformateur abaisseur (52), ladite section à basse tension comprenant au moins un chargeur de batteries (56), un ensemble de batteries rechargeables (57), ainsi qu'un moteur électrique (59) pour entraîner une pompe (60) pour régler une pression dans le circuit hydraulique, auquel au moins lesdits moyens de soulèvement (6) et lesdits moyens de tassement (5) sont raccordés.

15. Installation selon la revendication 14, caractérisée en ce qu'elle comporte des moyens de commande (61, 62) pour régler le débit et la pression du fluide dans ledit circuit hydraulique.

16. Installation selon l'une quelconque des revendications précédentes, comprenant en outre une pluralité de véhicules de collecte, caractérisée en ce qu'elle comporte un dispositif de télécommande monté sur chaque véhicule pour actionner lesdites unités de collecte pendant la collecte d'un type quelconque des déchets.

17. Procédé pour réaliser la collecte différenciée de déchets à partir d'une pluralité d'unités de collecte réparties dans une zone, comprenant le dépôt de déchets triés dans une unité de collecte (220a, 220b) par amenée desdits déchets différents à des récipients différents (2-2e), caractérisé par les étapes consistant à :
peser lesdits déchets triés avant l'envoi des déchets différents à différents récipients et mémorisation des données pertinentes ;
émettre les données concernant la quantité de déchets à l'intérieur de chaque récipient et concernant l'état des unités de collecte à l'unité centrale de commande (100) ;
mémoriser lesdites données dans ladite unité centrale de commande (100) et traiter lesdites données pour gérer et commander l'opération d'évacuation de chaque type de déchet à partir de chacune desdites unités de collecte (200a, 200b) à l'aide de moyens dédiés d'évacuation ; et
commander le fonctionnement desdites unités de collecte (200a, 200b) au moyen de ladite unité de commande centrale (100) conformément aux données reçues de la part desdites unités de collecte (200a, 200b).

18. Procédé selon la revendication 17, selon lequel lesdits signaux sont transmis par l'intermédiaire des lignes d'un réseau commutable ou d'une ligne dédiée du réseau de transmission de données.

19. Procédé selon la revendication 17, dans lequel lesdits signaux sont transmis par l'intermédiaire d'une liaison à haute fréquence.

20. Procédé selon la revendication 18, selon lequel dans ladite unité centrale de commande, lesdites données provenant desdites unités de collecte sont traitées de manière à autoriser au empêcher la collecte de déchets au niveau desdites unités de collecte et pour gérer les opérations de manière à évacuer les déchets et exécuter une maintenance dans chaque unité de collecte.

21. Procédé selon la revendication 17, caractérisé en ce qu'il comprend la reconfiguration automatique de chacune desdites unités de collecte (200a, 200b) au moyen de l'affectation d'un récipient, déjà affecté à la collecte d'un certain type de déchets, à la collecte d'un autre type de déchets.
